# EUROPÄISCHE PATENTSCHRIFT

(11) **EP 1 826 574 B1**
(45) Veröffentlichungstag und Bekanntmachung des Hinweises auf die Patenterteilung: **29.04.2015**
(21) Anmeldenummer: 06025812.6
(22) Anmeldetag: 13.12.2006
(51) Int. Cl.: G01N 35/10, G01N 30/24, G01N 1/40

(54) **Verfahren zur Vorbereitung von Proben für ein Analysegerät und Probenvorbereitungsstation hierfür**
Method for preparing samples for an analyser and sample preparation station therefore
Procédé destiné à la préparation d'échantillons pour un appareil d'analyse et station de préparation d'échantillons correspondante

(30) Priorität: 16.12.2005 DE 102005060303
(43) Veröffentlichungstag der Anmeldung: 29.08.2007
(73) Patentinhaber: Gerstel Systemtechnik GmbH & Co. KG, 45473 Mülheim an der Ruhr (DE)
(72) Erfinder: Bremer, Dirk, 47226 Duisburg (DE); Rose, Bernhard, 40627 Düsseldorf (DE)
(74) Vertreter: Sparing Röhl Henseler

(56) Entgegenhaltungen:
- EP-A1- 1 010 977
- DE-C1- 10 219 790
- GB-A- 2 022 246
- JP-A- 2005 095 113
- US-A1- 2004 016 341
- US-A1- 2005 014 156

## Beschreibung

Die Erfindung betrifft ein Verfahren zur Vorbereitung von Proben für ein Analysegerät und eine Probenvorbereitungsstation hierfür.

Zum Adsorbieren und/oder Sorbieren von Analyten ist es bekannt, Kartuschen mit darin befindlichen Packungen zu verwenden, die man von entsprechendem Probenmaterial durchströmen läßt, um die Analyten später mittels eines entsprechenden Analysegeräts, etwa mittels eines Flüssigkeits- oder Gaschromatographen, qualitativ und/oder quantitativ zu analysieren. Dies erfordert jedoch eine aufwendige manuelle Handhabung.

Aus DE 102 19 790 C1 ist eine Handhabungseinrichtung für Proben für ein Analysegerät bekannt, die einen längs drei zueinander senkrechten Achsen beweglichen Greifer umfaßt, mit dem sich unterschiedliche Probenaufnehmer, so etwa unterschiedliche Spritzen als auch mit Transportköpfen ausgestattete Probenrohre, handhaben lassen.

Aufgabe der Erfindung ist es, ein Verfahren zur Vorbereitung von Proben für ein Analysegerät und eine Probenvorbereitungsstation hierfür zu schaffen, die es ermöglichen, automatisiert auch größere Flüssigkeitsvolumina über eine Packung zu leiten, um die zu untersuchenden Substanzen einer Probe auf der Packung anzureichern.

Diese Aufgabe wird entsprechend den Merkmalen des Anspruchs 1 bzw. 12 gelöst.

Hierdurch wird es ermöglicht, handelsübliche Kartuschen mit Packungen oder zum Selbstpacken als Einmalartikel zu verwenden, auf denen automatisiert Analyten auch aus größeren Flüssigkeitsvolumina angereichert werden können.

Weitere Ausgestaltungen der Erfindung sind der nachfolgenden Beschreibung und den Unteransprüchen zu entnehmen.

Die Erfindung wird nachstehend anhand von in den beigefügten Abbildungen dargestellten Ausführungsbeispielen näher erläutert.

Fig. 1 zeigt ausschnittweise eine Ausführungsform einer Probennahmestation im Schnitt.

Fig. 2 zeigt ausschnittweise einen um 90° gedrehten Schnitt der Probennahmestation von Fig. 1.

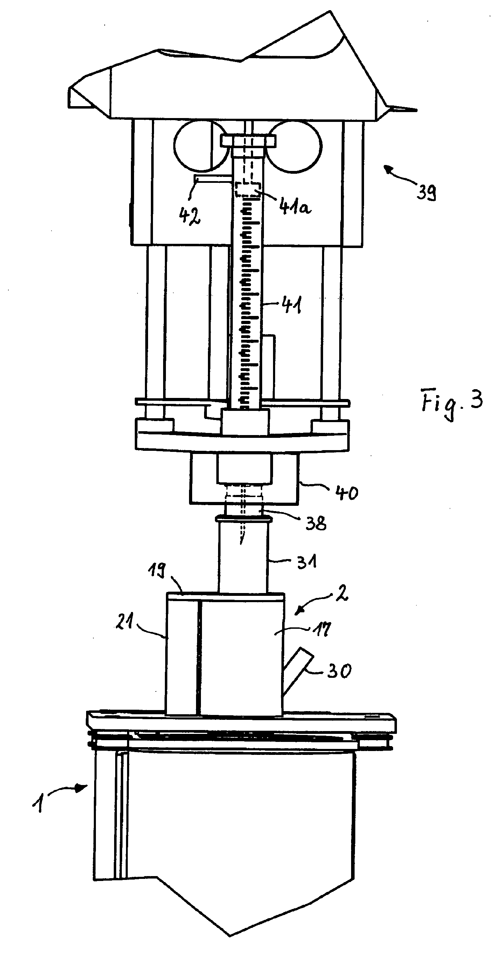

Fig. 3 zeigt ausschnittweise die Probennahmestation von Fig. 1 bei einem Konditioniervorgang.

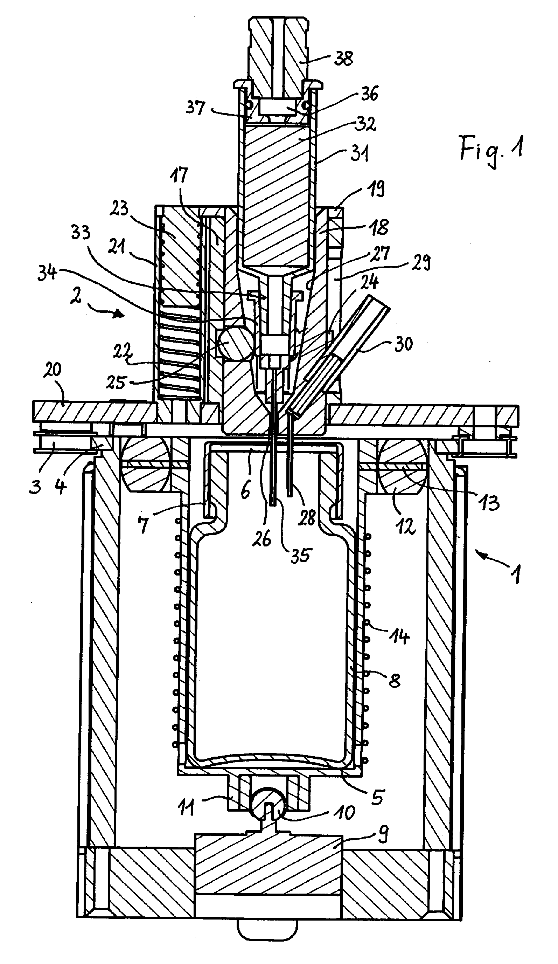

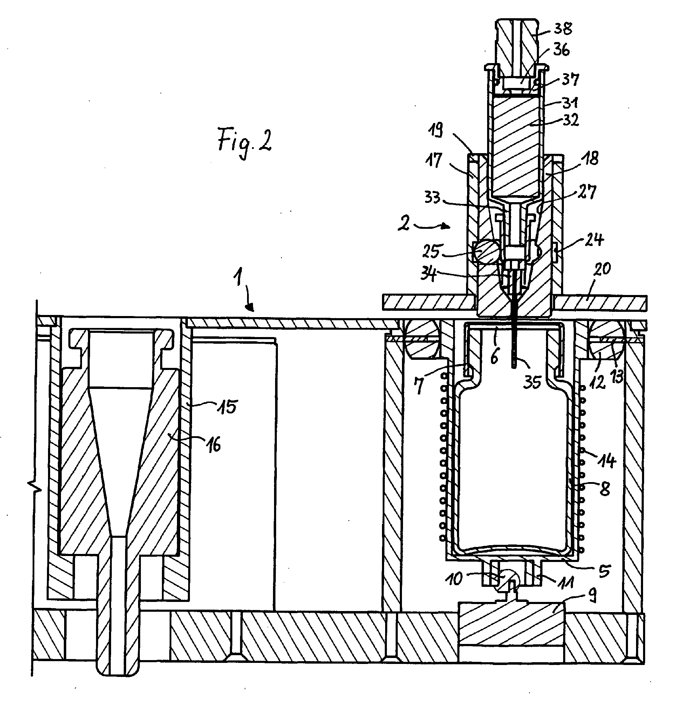

Die in Fig. 1, 2 dargestellte Probennahmestation umfaßt ein Gestell 1 mit einem schlittenförmigen Probenaufgeber 2, der über Rollen 3 längs Schienen 4 zwischen zwei Positionen verfahrbar (oder verschwenkbar, nicht dargestellt) ist. Hiervon wird eine als Probenaufgabe- und die andere als Eluierposition verwendet. In der Eluierposition befindet sich eine trogartige Behälterhalterung 5 zur Aufnahme eines mit einer ein Septum 6 haltenden Kappe 7 versehenen Probenbehälters 8, in diesem Ausführungsbeispiel ein Vial.

Zweckmäßigerweise ist vorgesehen, daß sich die im jeweiligen, in der Eluierposition befindlichen Probenbehälter 8 gesammelte Probe schütteln läßt. Hierzu kann vorgesehen sein, daß der Probenbehälter 8 ein magnetisches Rührelement enthält, während unter der Behälterhalterung 5 eine ein wechselndes Magnetfeld erzeugende Einrichtung zum Erzeugen einer Rührbewegung des Rührelements angeordnet ist. Auch kann das Rühren mittels Ultraschall vorgenommen werden.

Ferner kann ein Schütteln der Behälterhalterung 5 und damit der Probe in dem davon aufgenommenen Probenbehälter 8 vorgesehen sein. Hierzu ist zweckmäßigerweise die Behälterhalterung 5 an ihrem oberen Ende kardanisch aufgehängt und über einen Elektromotor 9 antreibbar. Der Elektromotor 9 treibt im Betrieb eine exzentrisch auf seiner Welle sitzende Kugel 10 geschwindigkeitskontrolliert an, wobei die Kugel 10 in einem zentralen Hohlzapfen 11 unter dem Boden der Behälterhalterung 5 angeordnet ist und über ihre exzentrische Anordnung aufgrund der kardanischen Aufhängung an deren oberem Ende die Behälterhalterung 5 und damit einen darin befindlichen Probenbehälter 8 einer rotierenden Schwenkbewegung unterwirft.

Die kardanische Aufhängung kann über einen bombierten Ring 12, der über zwei um 180° gegenüber angeordnete Achsen 13 am Gestell 1 und an dem die Behälterhalterung 5 über zwei weitere hierzu um 90° versetzte Achsen 13 gelagert ist.

Zum Eindampfen und gegebenenfalls zum Derivatisieren von Probenmaterial im Probenbehälter 8 ist es zweckmäßig, die Behälterhalterung 5 mit einer Heizeinrichtung etwa in Form einer Heizwicklung 14 zu umgeben.

In der Probenaufgabeposition befindet sich eine Halterung 15 mit einem Abführtrichter 16, an dessen unterem Ende eine Abführleitung anschließbar ist. Gegebenenfalls kann der Abführtrichter 16 eintrittsseitig mit einem Septum versehen sein.

Der Probenaufgeber 2 umfaßt eine hülsenförmige Halterung 17 für eine Aufnahme 18. Die Aufnahme 18 ist oberseitig mit einer Platte 19 verbunden, während auf einer Bodenplatte 20 des Probenaufgebers 2 mehrere Zylinder 21 angeordnet sind, die bodenseitig abgestützte Federn 22 aufnehmen, die sich oberseitig an der Platte 19 bzw. davon getragenen Führungseinsätzen 23 abstützen und dementsprechend die Aufnahme 18 in Richtung von der Bodenplatte 20 weg vorspannen. Die Halterung 17 besitzt innenseitig eine umlaufende Nut 24, während die Aufnahme 18 Kugeln 25 unverlierbar aufnimmt, die in die Nut 24 zum Arretieren der Aufnahme 18 in der Halterung 17 eindrückbar sind. Die Aufnahme 18 besitzt ferner einen sich bis zu einer bodenseitigen Durchtrittsöffnung 26 verjüngenden Innenraum 27 und trägt eine bodenseitig vorragende Spritzennadel 28, die mit einem durch einen vertikalen Schlitz 29 der Halterung 17 nach außen ragenden Anschlußteil 30 verbunden ist. Das obere Ende des Schlitzes 29 dient dabei zugleich als Anschlag für die nicht arretierte, durch die Federn 22 nach oben gedrückte Aufnahme 18.

Die Aufnahme 18 dient zum Aufnehmen einer spritzenkörperförmigen Kartusche 31 etwa aus Glas oder Kunststoff, die in ihrem Inneren eine Packung 32 aus adsorbierendem und/oder sorbierendem Material und an ihrem Fortsatz 33 einen Aufsatz 34 mit einer Spritzennadel 35 aufnimmt. An dem der Spritzennadel 35 gegenüberliegenden Ende ist die Kartusche 31 durch einen an ihrer Innenwandung dicht anliegenden, eine mittige, durch eine Dichtung 36 abgedeckte Öffnung aufweisenden Einsatz 37, der einen sich nach außen erstreckenden Transportkopf 38 trägt, verschlossen. Die Dichtung 36 kann eine Membran sein oder ein Kartuschenseptum. Die Kartusche 31 ist in die Aufnahme 18 einsetzbar, wobei der Aufsatz 34 die Kugeln 25 nach außen drückt, die bei entsprechend weit in die Halterung 17 eingedrückter Aufnahme 18 in die Nut 24 einrasten. Durch Hochziehen der Kartusche 31 über den Transportkopf 38 können die Kugeln 25 über die Federn 22 wieder aus der Nut 24 heraus- und die Aufnahme 18 nach oben gedrückt werden, bis das Anschlußteil 30 im Schlitz 29 zur Anlage gelangt.

Eine frei programmierbare, automatische Handhabungseinrichtung 39, die einen in drei zueinander senkrechten Achsen beweglichen Greifer 40 aufweisen kann, mit dem die mit einem Transportkopf 37 versehene Kartusche 31 gehandhabt werden kann, ist in DE 102 19 790 C1 beschrieben. Hiermit können auch Probenbehälter 8 mit magnetisierbarem Deckel 7 gehandhabt werden, wenn der Greifer 40 der Handhabungseinrichtung 39 zum Halten des Probenbehälters 8 ausgebildet bzw. zu diesem Zweck beispielsweise mit eingesetzten Permanentmagneten, die den Probenbehälter 8 über dessen magnetisierbare Kappe 7 halten können, versehen ist. - Gegebenenfalls kann auch für die Probenbehälter 8 ein weiterer, gegen den Greifer 40 beispielsweise durch Verdrehen auswechselbarer Greifer bzw. eine zweite Handhabungseinrichtung verwendet werden.

Die Verfahrensweise ist dann wie folgt:

Zunächst werden Kartuschen 31 als Einwegmaterial soweit vorbereitet und in einem Magazin gelagert. Dies geschieht zweckmäßigerweise derart, daß ihre Spritzennadeln 35 durch im Magazin befindliche Dichtungen, insbesondere Septen, gestochen werden, so daß die Kartuschen 31 abgedichtet aufgenommen werden. Gegebenenfalls wird der Totraum über der Packung 32 der Kartuschen 31 reduziert.

Mittels der Handhabungseinrichtung 39 wird in die Aufnahme 18 des in Probenaufgabeposition befindlichen Probenaufgebers 2 eine aus dem Magazin entnommene Kartusche 31 unter Arretieren der Aufnahme 18 eingesetzt.

Danach erfolgt zweckmäßigerweise zunächst ein Konditionieren der Kartusche 31 bzw. der Packung 32, indem mittels eines Injektors 41, bei dem es sich um eine Injektionsspritze oder um eine an eine Pumpe, etwa eine Schlauchpumpe od.dgl., angeschlossene Injektionsnadel handelt, Lösungsmittel durch die Dichtung 36 in die Kartusche 31 injiziert wird, das durch die Spritzennadel 35 in den Abführtrichter 16 entleert wird. Gegebenenfalls kann dies mit weiteren Lösungsmitteln fortgesetzt werden, die beispielsweise durch den Injektor 41 einer entsprechenden Flaschenbatterie entnommen werden.

Anschließend erfolgt die Probenaufgabe, indem mittels des gleichen oder eines weiteren Injektors 41 Probenmaterial aus einem entsprechenden Behälter, etwa einem Vial, oder einer Durchflußküvette entnommen und in die Kartusche 31 durch die Dichtung 36 hindurch injiziert wird. Damit auch bei Verwendung einer Injektionsspritze als Injektor 41 die Packung 32 von einer entsprechenden Menge an Probenmaterial durchströmt wird, kann dies auch mehrfach vorgenommen werden. Von der Packung 32 adsorbierte und/oder sorbierte Analyten verbleiben auf dieser, während der Rest durch die Spritzennadel 35 in den Abführtrichter 16 gelangt.

Die Packung 32 kann gegebenenfalls vor und/oder nach der Probenaufgabe getrocknet werden, indem gegebenenfalls erwärmtes Inertgas hindurchgeführt wird. Dies kann über die Injektionsnadel des Injektors 41 geschehen. Beispielweise kann bei Verwendung einer Injektionsspritze als Injektor 41 diese einen seitlichen Gasanschluß 42 aufweisen, über den zum Gaszutritt der Kolben 41a der Injektionsspritze zurückgezogen werden muß. Dies kann mittels der Handhabungseinrichtung 39 entsprechend programmiert automatisch vorgenommen werden.

In der Eluierposition wird mittels der Handhabungseinrichtung 39 ein Probenbehälter 8 angeordnet.

Wenn die Probenaufgabe in der Probenaufgabeposition beendet ist und sich der Probenbehälter 8 in der Eluierposition befindet, wird mittels der Handhabungseinrichtung 39 die Kartusche 31 soweit hochgezogen, daß die Aufnahme 18 aus ihrer Arretierung zur Halterung 17 gelöst wird, so daß die Spritzennadeln 28, 35 zurückgezogen sind und somit der Probenaufgeber 2 in die Eluierposition verfahren werden kann.

Nachdem der Probenaufgeber 2 seine Position über dem Probenbehälter 8 in der Eluierposition eingenommen hat, wird die Kartusche 31 mit der mit Analyten beladenen Packung 32 mittels der Handhabungseinrichtung 39 in die Aufnahme 18 und damit letztere in ihre Halterung 17 gedrückt und arretiert. Dadurch penetrieren die Spritzennadeln 28, 35 das Septum 6 des Probenbehälters 8.

Mit dem Injektor 41 wird Eluiermittel, gegebenenfalls mehrfach und gegebenenfalls auch in Form von unterschiedlichen Lösungsmitteln, durch die Dichtung 36 in die Kartusche 31 injiziert, wodurch das Eluiermittel die Packung 32 durchströmt und mit Analyten beladen durch die Spritzennadel 35 in den Probenbehälter 8 gelangt. Das in letzterem enthaltene Gasvolumen kann durch die zweite Spritzennadel 28 und das Anschlußteil 30 entweichen.

Gegebenenfalls kann sich auch hier ein Trocknungsvorgang anschließen, bei dem beispielsweise bei herausgezogener Kartusche 32 über die Injektionsnadel des Injektors 41 Inertgas in den Probenbehälter 8 ein- und über die mittels des Injektors 41 über die Aufnahme 18 in den Probenbehälter 8 eingedrückte Spritzennadel 28 wieder abgeführt wird. Hierbei kann zwecks Unterstützung des Verdampfens des Lösungsmittels mittels der Heizeinrichtung 14 der Probenbehälter 8 beheizt werden. Beim Trocknungsvorgang kann über das Anschlußteil 30 - gegebenenfalls unter Anlegen eines Unterdrucks unterstützt - abgelüftet werden.

Dann kann es notwendig sein, die im Probenbehälter 8 verbliebenen Analyten erneut mit einem Lösungsmittel aufzunehmen, das über den Injektor 41 zugeführt wird. Hierzu kann der Probenbehälter 8 mittels des Elektromotors 9 geschüttelt bzw. das Material im Probenbehälter 8 magnetisch oder mittel Ultraschall gerührt werden. Es kann auch noch ein Derivatisierschritt folgen.

Anschließend kann der Probenbehälter 8 in einem Magazin angeordnet werden, um später Probenmaterial für eine insbesondere chromatographische Analyse zu entnehmen, oder mittels einer von der Handhabungseinrichtung 39 gehandhabten Entnahmespritze kann direkt Probenmaterial durch das Septum 6 hindurch entnommen und einem Analysegerät zugeführt werden.

## Patentansprüche

1. Verfahren zur Vorbereitung von Proben für ein Analysegerät, insbesondere einen Chromatographen, wobei
ein zwischen einer Probenaufgabe- und einer Eluierposition beweglicher Probenaufgeber (2) verwendet wird, der eine Halterung (17) für eine darin bewegliche und arretierbare Aufnahme (18) für eine Kartusche (31), versehen mit einer Packung (32) zum Aufnehmen von Analyten, einer Spritzennadel (35), einer Dichtung (36) und einem Transportkopf (38), umfaßt,
eine Kartusche (31) in die Aufnahme (18) des in der Probenaufgabeposition befindlichen Probenaufgebers (2) eingesetzt wird,
wenigstens einmal mittels eines Injektors (41) Probenmaterial durch die Dichtung (36) in die Kartusche (31) injiziert wird, das nach Durchlaufen der Packung (32) durch die erste Spritzennadel (35) abgeführt wird,
in der Eluierposition ein leerer Probenbehälter (8) angeordnet wird,
der Probenaufgeber (2) mit der beladenen Kartusche (31) in die Eluierposition bewegt und die Aufnahme (18) mit der Kartusche (31) in der Halterung (17) des Probenaufgebers (2) arretiert wird, und
wenigstens einmal mittels eines Injektors (41) wenigstens ein Elutionsmittel durch die Dichtung (36) in die Kartusche (31) injiziert wird, das durch die Spritzennadel (35) in den Probenbehälter (8) abgeführt wird,
wobei Kartusche (31), Probenbehälter (8) und Injektor (41) automatisch gehandhabt werden.

2. Verfahren nach Anspruch 1, **dadurch gekennzeichnet, daß** eine Aufnahme (18), die eine weitere, mit einem externen Anschlußteil (30) verbundene Spritzennadel (28) trägt, und mit einem Behälterseptum (6) versehener Probenbehälter (8) verwendet wird, wobei beim Bewegen des Probenaufgebers (2) mit der beladenen Kartusche (31) in die Eluierposition das Behälterseptum (6) von den beiden Spritzennadeln (35, 28) durchstochen wird.

3. Verfahren nach Anspruch 1 oder 2, **dadurch gekennzeichnet, daß** die Packung (32) der Kartusche (31) vor dem Injizieren des Probenmaterials durch Injizieren von wenigstens einem Lösungsmittel konditioniert wird.

4. Verfahren nach einem der Ansprüche 1 bis 3, **dadurch gekennzeichnet, daß** über den Injektor (41) das Probenmaterial aus einem Probenbehälter entnommen wird.

5. Verfahren nach einem der Ansprüche 1 bis 3, **dadurch gekennzeichnet, daß** mittels des Injektors (41) das Probenmaterial aus einer Durchlaufküvette entnommen wird.

6. Verfahren nach einem der Ansprüche 1 bis 5, **dadurch gekennzeichnet, daß** als Injektor (41) eine Spritze oder eine von einer Pumpe versorgte Injektionsnadel verwendet wird.

7. Verfahren nach einem der Ansprüche 1 bis 6, **dadurch gekennzeichnet, daß** die Packung (32) der Kartusche (31) nach der Probenaufgabe getrocknet wird.

8. Verfahren nach einem der Ansprüche 1 bis 7, **dadurch gekennzeichnet, daß** die vom Probenbehälter (8) aufgenommene, eluierte Probe getrocknet wird.

9. Verfahren nach Anspruch 8, **dadurch gekennzeichnet, daß** die getrocknete Probe von mittels des Injektors injiziertem Lösungsmittel wieder aufgenommen wird.

10. Verfahren nach Anspruch 9, **dadurch gekennzeichnet, daß** die Probe und das Lösungsmittel zum Aufnehmen mischend bewegt werden.

11. Verfahren nach Anspruch 10, **dadurch gekennzeichnet, daß** der Probenbehälter (8) geschüttelt wird.

12. Probenvorbereitungsstation für Proben für ein Analysegerät, insbesondere einen Chromatographen, umfassend
einen zwischen einer Probenaufgabe- und einer Eluierposition beweglichen Probenaufgeber (2), der eine Halterung (17) für eine darin bewegliche und arretierbare Aufnahme (18) für eine Kartusche (31), austrittsseitig versehen mit einer Spritzennadel (35), eintrittsseitig mit einer Dichtung (36) und einem Transportkopf (38) sowie mit einer Packung (32) zum Aufnehmen von Analyten, umfaßt.
wenigstens einen Injektor (41) und
wenigstens eine automatische Handhabungseinrichtung, mit der Kartuschen (31), der wenigstens eine Injektor (41) und Probenbehälter (8) handhabbar sind.

13. Probenvorbereitungsstation nach Anspruch 12, **dadurch gekennzeichnet, daß** die Aufnahme (18) eine weitere, mit einem externen Anschlußteil (30) verbundene Spritzennadel (28) trägt.

14. Probenvorbereitungsstation nach Anspruch 12 oder 13, **dadurch gekennzeichnet, daß** der Probenaufgeber (2) zwischen der Probenaufgabe- und der Eluierposition schlittenartig verfahrbar ist, wozu ein Gestell (1) mit einem schlittenförmigen Probenaufgeber (2) vorgesehen ist.

15. Probenvorbereitungsstation nach einem der Ansprüche 12 bis 14, **dadurch gekennzeichnet, daß** die Aufnahme (18) gegen Federkraft in ihre Halterung (17) eindrückbar und arretierbar ist, wozu die Halterung (17) innenseitig eine umlaufende Nut (24) besitzt, in die von der Aufnahme (18) unverlierbar aufgenommene Kugeln (25) eindrückbar sind.

16. Probenvorbereitungsstation nach Anspruch 15, **dadurch gekennzeichnet, daß** die Aufnahme (18) mittels der Kartusche (31) in ihre Halterung (17) eindrückbar und arretierbar ist, wozu die Kartusche (31) an ihrem Fortsatz (33) einen Aufsatz (34) mit einer Spritzennadel (35) aufnimmt, wobei der Aufsatz (34) die Kugeln (25) zum Einrasten in die Nut (24) nach außen drückt.

17. Probenvorbereitungsstation nach einem der Ansprüche 12 bis 16, **dadurch gekennzeichnet, daß** die Aufnahme (18) mindestens eine Kugel (25) trägt, die durch Einführen einer Kartusche (31) in eine Nut (24) in der Halterung (17) eindrückbar ist.

18. Probenvorbereitungsstation nach einem der Ansprüche 12 bis 17, **dadurch gekennzeichnet, daß** in der Probenaufgabeposition eine Abführeinrichtung (16) angeordnet ist.

19. Probenvorbereitungsstation nach einem der Ansprüche 12 bis 18, **dadurch gekennzeichnet, daß** in der Eluierposition eine Behälterhalterung (5) für einen Probenbehälter (8) angeordnet ist.

20. Probenvorbereitungsstation nach Anspruch 19, **dadurch gekennzeichnet, daß** die Behälterhalterung (5) beheizbar ist, wozu die Behälterhalterung (5) von einer Heizwicklung (14) umgeben ist.

21. Probenvorbereitungsstation nach einem der Ansprüche 12 bis 20, **dadurch gekennzeichnet, daß** die in einem von der Behälterhalterung (5) aufgenommenen Probenbehälter (8) enthaltene Probe durchmischbar ist, wozu der Probenbehälter (8) eine rotierende Schwenkbewegung ausführt.

22. Probenvorbereitungsstation nach Anspruch 21, **dadurch gekennzeichnet, daß** die Behälterhalterung (5) schüttelbar ist, wozu die Behälterhalterung (5) an ihrem oberen Ende kardanisch aufgehängt und über einen Elektromotor (9) antreibbar ist.

23. Probenvorbereitungsstation nach Anspruch 22, **dadurch gekennzeichnet, daß** die Behälterhalterung (5) an ihrem oberen Ende kardanisch aufgehängt ist und an ihrer Unterseite einen Exzenterantrieb (9, 10, 11) aufweist.

## Claims

1. Method for the preparation of samples for an analyser, in particular a chromatograph,
a sampler(2) being used which is moveable between a sample introduction position and an elution position and which comprises a holder (17) for a receptacle (18), moveable and lockable therein, for a cartridge (31), provided with a pack (32) for the reception of analytes, with a syringe needle (35), with a seal (36) and with a transport head (38),
a cartridge (31) being inserted into the receptacle (18) of the sampler (2) positioned in the sample introduction position,
sample material being injected at least once by means of an injector (41) through the seal (36) into the cartridge (31) and, after running through the pack (32), being discharged through the first syringe needle (35),
an empty sample container (8) being located at the elution position,
the sampler (2), together with the loaded cartridge (31), being moved into the elution position, and the receptacle (18), together with the cartridge (31), being locked in the holder (17) of the sample feeder (2), and
at least one eluent being injected at least once by means of an injector (41) through the seal (36) into the cartridge (31) and being discharged through the syringe needle (35) into the sample container (8),
the cartridge (31), sample container (8) and injector (41) being handled automatically.

2. Method according to Claim 1, **characterized in that** a receptacle (18), which carries a further syringe needle (28) connected to an external connection part (30), and a sample container (8) provided with a container septum (6) are used, the container septum (6) being pierced by the two syringe needles (35, 28) during the movement of the sampler (2), together with the loaded cartridge (31), into the elution position.

3. Method according to Claim 1 or 2, **characterized in that** the pack (32) of the cartridge (31) is conditioned, before the injection of the sample material, by the injection of at least one solvent.

4. Method according to one of Claims 1 to 3, **characterized in that** the sample material is extracted from a sample container via the injector (41).

5. Method according to one of Claims 1 to 3, **characterized in that** the sample material is extracted from a throughflow cuvette by means of the injector (41).

6. Method according to one of Claims 1 to 5, **characterized in that** a syringe or an injection needle supplied by a pump is used as the injector (41).

7. Method according to one of Claims 1 to 6, **characterized in that** the pack (32) of the cartridge (31) is dried after the sample introduction.

8. Method according to one of Claims 1 to 7, **characterized in that** the eluted sample received by the sample container (8) is dried.

9. Method according to Claim 8, **characterized in that** the dried sample is introduced again by solvent injected by means of the injector.

10. Method according to Claim 9, **characterized in that** the sample and the solvent are mix moved for introduction.

11. Method according to Claim 10, **characterized in that** the sample container (8) is shaken.

12. Sample preparation station for samples for an analyser, in particular a chromatograph, comprising
a sampler (2) which is moveable between a sample introduction position and an elution position and which comprises a holder (17) for a receptacle (18), moveable and lockable therein, for a cartridge (31), provided on the outlet side with a syringe needle (35), on the inlet side with a seal (36) and a transport head (38) and with a pack (32) for the reception of analytes,
at least one injector (41) and
at least one automatic handling device, by means of which cartridges (31) the at least one injector (41) and the sample container (8) can be handled.

13. Sample preparation station according to Claim 12, **characterized in that** the receptacle (18) carries a further syringe needle (28) connected to an external connection part (30).

14. Sample preparation station according to Claim 12 or 13, **characterized in that** the sampler (2) is moveable in a slide-like manner between the sample introduction position and the elution position, for which purpose a stand (1) having a slide-shaped sampler (2) is provided.

15. Sample preparation station according to one of Claims 12 to 14, **characterized in that** the receptacle (18) can be pressed into its holder (17) and locked counter to spring force, for which purpose the holder (17) possesses on the inside a peripheral groove (24), into which balls (25) captively received by the receptacle (18) can be pressed.

16. Sample preparation station according to Claim 15, **characterized in that** the receptacle (18) can be pressed into its holder (17) and locked by means of the cartridge (31), for which purpose the cartridge (31) receives on its extension (33) an attachment (34) with a syringe needle (35), the attachment (34) pressing the balls (25) outwards for latching into the groove (24).

17. Sample preparation station according to one of Claims 12 to 16, **characterized in that** the receptacle (18) carries at least one ball (25) which, as a result of the introduction of a cartridge (31), can be pressed into a groove (24) in the holder (17).

18. Sample preparation station according to one of Claims 12 to 17, **characterized in that** a discharge device (16) is arranged in the sample introduction position.

19. Sample preparation station according to one of Claims 12 to 18, **characterized in that** a container holder (5) for a sample container (8) is arranged in the elution position.

20. Sample preparation station according to Claim 19, **characterized in that** the container holder (5) is heatable, for which purpose the container holder (5) is surrounded by a heating coil (14).

21. Sample preparation station according to one of Claims 12 to 20, **characterized in that** the sample contained in a sample container (8) received by the container holder (5) is intermiscible, for which purpose the sample container (8) performs a rotating pivoting movement.

22. Sample preparation station according to Claim 21, **characterized in that** the container holder (5) is shakeable, for which purpose the container holder (5) is suspended cardanically at its upper end and can be driven via an electric motor (9).

23. Sample preparation station according to Claim 22, **characterized in that** the container holder (5) is suspended cardanically at its upper end and on its underside has an eccentric drive (9, 10, 11).

## Revendications

1. Procédé pour la préparation d'échantillons pour un appareil d'analyse, notamment un chromatographe, où :
- on utilise un distributeur d'échantillon (2) mobile entre une position de décharge d'échantillon et une position d'élution, lequel comporte un support (17) pour un réceptacle (18), mobile et immobilisable dans celui-ci, pour une cartouche (31) prévue avec un garnissage (32) pour la réception de produits à analyser, une aiguille de seringue (35), un moyen d'étanchéité (36), et une tête de transport (38) ;
- on introduit une telle cartouche (31) dans ledit réceptacle (18) dudit distributeur d'échantillon (2) dans ladite position de décharge d'échantillon ;
- on injecte, au moins une fois, du matériau d'échantillon dans ladite cartouche (31) au moyen d'un injecteur (41) au travers dudit moyen d'étanchéité (36), et on évacue ledit matériau au travers de ladite première aiguille de seringue (35) après la traversée dudit garnissage (32) ;
- on dispose un récipient d'échantillon (8) vide dans ladite position d'élution ;
- on déplace ledit distributeur d'échantillon (2), avec ladite cartouche (31) chargée, dans ladite position d'élution, et on immobilise ledit réceptacle (18) avec ladite cartouche (31) dans ledit support (17) dudit distributeur d'échantillon (2), et ;
- on injecte, au moins une fois, au moins un éluant dans ladite cartouche (31) au moyen d'un injecteur (41) au travers dudit moyen d'étanchéité (36), et on évacue ledit éluant dans ledit récipient d'échantillon (8) au travers de ladite aiguille de seringue (35) ;
- et où on manipule automatiquement laite cartouche (31), ledit récipient d'échantillon (8), et ledit injecteur (41).

2. Procédé selon la revendication 1, **caractérisé en ce qu'**on utilise un dit réceptacle (18) qui porte une autre aiguille de seringue (28) reliée à un raccord externe (30), et un récipient d'échantillon (8) comportant un septum de récipient (6), et où on transperce ledit septum de récipient (6) avec les deux dites aiguilles de seringue (35 ; 28), lors du mouvement dudit distributeur d'échantillon (2), avec ladite cartouche (31) chargée, vers ladite position d'élution.

3. Procédé selon la revendication 1 ou 2, **caractérisé en ce que** on conditionne ledit garnissage (32) de ladite cartouche (31), avant l'injection dudit matériau d'échantillon, par injection d'au moins un solvant.

4. Procédé selon l'une des revendications 1 à 3, **caractérisé en ce qu'**on prélève ledit matériau d'échantillon d'un récipient d'échantillon par ledit injecteur (41).

5. Procédé selon l'une des revendications 1 à 3, **caractérisé en ce qu'**on prélève ledit matériau d'échantillon d'une cuve d'écoulement au moyen dudit injecteur (41).

6. Procédé selon l'une des revendications 1 à 5, **caractérisé en ce qu'**on utilise comme dit injecteur (41) une seringue ou une aiguille d'injection alimentée par une pompe.

7. Procédé selon l'une des revendications 1 à 6, **caractérisé en ce qu'**on sèche ledit garnissage (32) de ladite cartouche (31) après la décharge d'échantillon.

8. Procédé selon l'une des revendications 1 à 7, **caractérisé en ce qu'**on sèche ledit échantillon élué recueilli par ledit récipient d'échantillon (8).

9. Procédé selon la revendication 8, **caractérisé en ce qu'**on prélève à nouveau ledit échantillon séché, par du solvant injecté au moyen dudit injecteur.

10. Procédé selon la revendication 9, **caractérisé en ce qu'**on agite et mélange ledit échantillon et ledit solvant lors du prélèvement.

11. Procédé selon la revendication 10, **caractérisé en ce qu'**on agite ledit récipient d'échantillon (8).

12. Poste de préparation d'échantillon pour des échantillons pour un appareil d'analyse, notamment un chromatographe, comportant:
- un distributeur d'échantillon (2) mobile entre une position de décharge d'échantillon et une position d'élution, qui comporte un support (17) pour un réceptacle (18), mobile et immobilisable dans celui-ci, pour une cartouche (31) équipée du côté aval avec une aiguille de seringue (35) et du côté amont avec un moyen d'étanchéité (36), et avec une tête de transport (38) ainsi qu'un garnissage (32) pour la réception de produits à analyser ;
- au moins un injecteur (41), et ;
- au moins un dispositif de manipulation automatique apte à manipuler des cartouches (31), ledit au moins un injecteur (41) et des récipients d'échantillon (8).

13. Poste de préparation d'échantillon selon la revendication 12, **caractérisé en ce que** ledit réceptacle (18) porte une autre aiguille de seringue (28) reliée à un raccord externe (30).

14. Poste de préparation d'échantillon selon la revendication 12 ou 13, **caractérisé en ce que** ledit distributeur d'échantillon (2) est mobile en coulissement entre ladite position de décharge et ladite position d'élution, et qu'à cette fin un bâti (1) est prévu avec un dit distributeur d'échantillon (2) en forme de coulisseau.

15. Poste de préparation d'échantillon selon l'une des revendications 12 à 14, **caractérisé en ce que** ledit réceptacle (18) peut être enfoncé et immobilisé dans son dit support (17) à l'encontre de l'effort d'un ressort, et qu'à cette fin ledit support (17) comporte intérieurement une gorge circonférentielle (24), dans laquelle peuvent être poussées des billes (25) enfermées par ledit réceptacle (18).

16. Poste de préparation d'échantillon selon la revendication 15, **caractérisé en ce que** ledit réceptacle (18) peut être enfoncé et immobilisé dans son dit support (17) au moyen de ladite cartouche (31), et qu'à cette fin ladite cartouche (31) comporte en son prolongement (33) un embout (34) avec une aiguille de seringue (35), où ledit embout (34) appuie sur lesdites billes (25) vers l'extérieur pour les faire pénétrer dans ladite gorge (24).

17. Poste de préparation d'échantillon selon l'une des revendications 12 à 16, **caractérisé en ce que** ledit réceptacle (18) porte au moins une bille (25), qui peut être enfoncée dans une gorge (24) dans ledit support (17) lors de l'introduction d'une dite cartouche (31).

18. Poste de préparation d'échantillon selon l'une des revendications 12 à 17, **caractérisé en ce qu'**un dispositif d'évacuation (16) est agencé dans ladite position de décharge d'échantillon.

19. Poste de préparation d'échantillon selon l'une des revendications 12 à 18, **caractérisé en ce que**, dans ladite position d'élution, un support de récipient (5) est agencé pour un dit récipient d'échantillon (8).

20. Poste de préparation d'échantillon selon la revendication 19, **caractérisé en ce que** ledit support de récipient (5) peut être chauffé, et qu'à cette fin ledit support de récipient (5) est entouré par un bobinage chauffant (14).

21. Poste de préparation d'échantillon selon l'une des revendications 12 à 20, **caractérisé en ce que** ledit échantillon contenu dans un dit récipient d'échantillon (8) pris dans le support de récipient (5) est mélangeable, et qu'à cet effet ledit récipient d'échantillon (8) effectue un mouvement rotatif d'agitation.

22. Poste de préparation d'échantillon selon la revendication 21, **caractérisé en ce que** ledit support de récipient (5) peut être remué, et qu'à cet effet ledit support de récipient (5) est suspendu à la cardan à son extrémité supérieure, et peut être entraîné par un moteur électrique (9).

23. Poste de préparation d'échantillon selon la revendication 22, **caractérisé en ce que** ledit support de récipient (5) est suspendu à la cardan à son extrémité supérieure, et comporte un entraînement excentrique (9, 10, 11) à son extrémité inférieure.
